# EUROPEAN PATENT APPLICATION

(11) **EP 1 057 406 A1**
(43) Date of publication of application: **06.12.2000**
(21) Application number: 00304743.8
(22) Date of filing: 05.06.2000
(51) Int. Cl.: A01N 25/34

(54) **Molluscicidal strip**

(30) Priority: 05.06.1999 GB 9913030
(71) Applicant: V & A Marketing Limited, Llandaff North, Cardiff CF4 2JP (GB)
(72) Inventor: Llewellyn-Jones, John Adrian, Cardiff CF3 6XG (GB)
(74) Representative: Evans, Huw David Duncan

(57) **Abstract**

A pest control device for controlling molluscs, such as slugs and snails in gardens and other environments comprises an elongate strip of flexible substrate material, which is coated on at least one side thereof with a molluscicide. In use, the device can be joined end-to-end with itself or other devices around the stem of a plant or around an entire border or other area of the garden. Slugs and snails are unable to reach the growing plants without climbing over the physical barrier and coming into contact with the molluscicide thereon.

## Description

This invention relates to pest control, and more particularly to controlling molluscs, such as slugs and snails in gardens and other environments.

Slugs and snails are common horticultural and agricultural pests, which consume the foliage of growing plants. It has been proposed to control such pests using a molluscicide, such as metaldehyde. Typically the molluscicide is supplied in the form of small pellets, which are sprinkled around the garden. The pellets also contain a bait which attracts slugs and snails to consume the molluscicide.

A disadvantage of such pellets is that they are unattractive in the garden, particularly because they need to be sprinkled liberally in order to be effective. Also, there is a risk that pellets can be consumed by animals, birds or children.

UK Patent No. 2 291 329 discloses a solution to the above mentioned problems, in the form or a device comprising a cardboard tube, which is coated on its outer surface with a powdered form of a proprietary molluscicide, such as metaldehyde.

In use, the device is placed on the soil around growing plants, thereby providing a physical barrier, which is also coated with a molluscicide.

The device is extremely effective at controlling slugs and snails, since they are unable to reach the growing plants without climbing over the physical barrier and coming into contact with the molluscicide thereon. Thus, the need to liberally sprinkle conventional pellets is avoided.

A disadvantage of the above-mentioned device is that it is difficult to coat the tube with the molluscicide in a cost effective manner. Furthermore, it is difficult to place the device around a growing plant, once it foliage has reached a certain size.

We have now devised a pest control device, which alleviates the above-mentioned problems.

In accordance with this invention, as seen from a first aspect, there is provided a pest control device comprising an elongate strip of flexible substrate material, which is coated on at least one side thereof with a molluscicide.

The device is much easier to manufacture than the known device, since a strip is much easier to coat with a molluscicide than a tube is.

In use, the device can be joined end-to-end with itself or other devices around the stem of a plant, regardless of its size. Furthermore, a plurality of the devices can be joined end-to-end around an entire border or other area of the garden.

Preferably, complementary engaging means are provided at opposite ends of the strip, so that the strips can be joined end-to-end with each other or with other strips.

Preferably the complementary engaging means comprise slits respectively extending from opposite side edges of the strip across the width thereof adjacent respective opposite ends of the strip.

Preferably the substrate material comprises plastics or more preferably a bio-degradable material, such as card or cardboard.

Preferably the strip is also coated with a bait and a substance which repels vertebrates, such as birds and hedgehogs.

Preferably an adhesive such as a latex adhesive is applied to the strip prior to coating.

The devices can be supplied loose or joined end-to-end on a reel.

Alternatively, in accordance with this invention, as seen from a second aspect, there is provided an assembly of said pest control devices formed side-by-side from a sheet of said substrate material, which is divided into individual devices by pre-formed lines of weakness.

The assembly is much easier to manufacture, since it is relatively straightforward to coat sheets of the substrate material with molluscicide. In use, the user merely has to tear off individual strips as and when they are required.

One or more of the coated sheets can be conveniently packaged in a bag and hung on a display rack.

Also, in accordance with this invention as seen from a third aspect, there is provided a method of protecting a plant or area against pests comprising the steps of:
providing a pest control device comprising a strip of flexible substrate material coated on at least one side thereof with a molluscicide; and
joining the device end-to-end with itself or with other such devices around the area or plant to be protected.

Preferably the or each device is separated from a sheet of such devices, say by tearing along performed lines of weakness in the sheet.

Also, in accordance with this invention as seen from a fourth aspect, there is provided a method of forming pest control devices comprising coating a sheet of flexible substrate material with a molluscicide and subsequently dividing the sheet into elongate strips to form individual devices.

Preferably the sheet is formed with lines of weakness, along which the sheet can be divided.

An embodiment of this invention will now be described by way of example only and with reference to the accompanying drawings, in which:
FIGURE 1 is a plan view of a sheet of pest control strips in accordance with this invention; and
FIGURE 2 is a perspective view of one of the pest control strips of Figure 1, when in use.

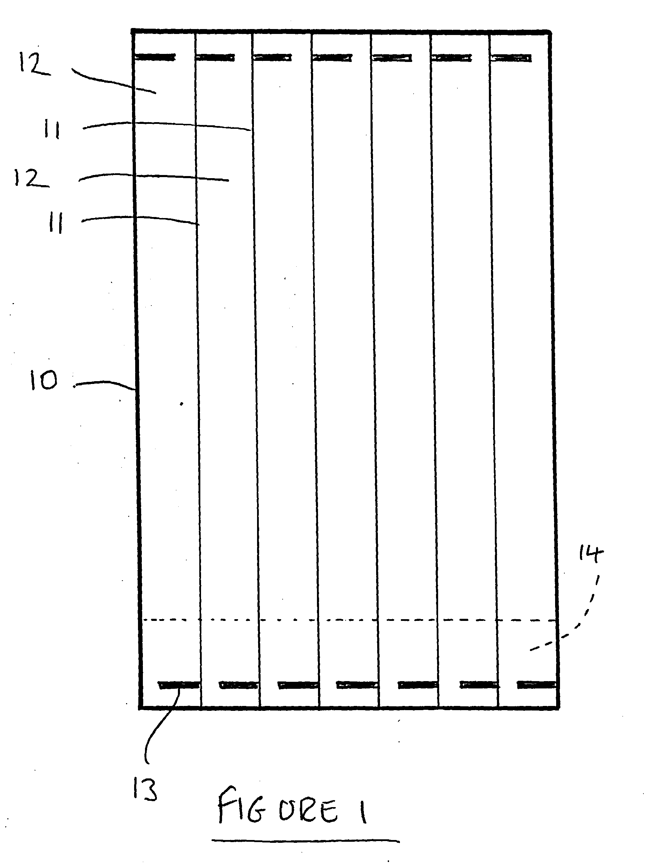

Referring to Figure 1 of the drawings, there is shown a sheet 10 of flexible cardboard or plastics material, which is coated on one side with a powdered or granular proprietary molluscicide, consisting of a molluscicide agent mixed with a bait and a vertebrate repellant. The molluscicide is adhered to the cardboard sheet 10 by a latex adhesive, which is applied over the surface of the sheet 10 prior to sprinkling the molluscicide thereon. Preferably the sheet 10 is connected end-to-end with other such sheets, so that the sheets can be web-fed through an apparatus which applies the adhesive and the molluscicide.

The sheet 10 is stamped or scored with a plurality of parallel lines of weakness 11, which divide the sheet 10 into a plurality of elongate parallel strips 12. At the same time, the sheet 10 is also stamped or scored to form transverse slots 13 adjacent opposite ends of each strip 12. The slots 13 at opposite ends of each strip extend from respective opposite side edges of the strip 12 to a point beyond the centre line of the strip.

A plurality of sheets 10 are packaged in a stack in a plastics bag, which can be hung on a display rack in a shop or garden centre.

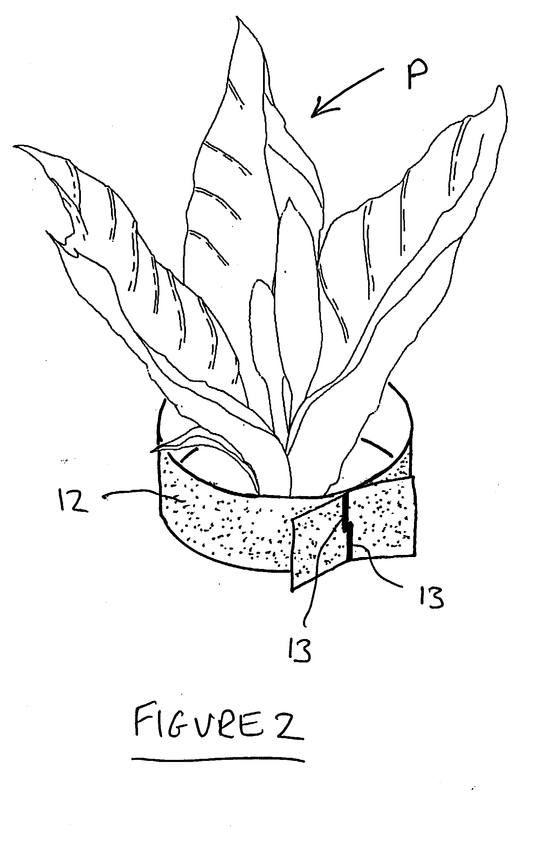

Referring to Figure 2 of the drawings, in use in order to protect a plant from slugs and snails, the user has to detach one of the strips 12 from a side of the sheet 10, by tearing along one of the lines of weakness 10.

The strip 12 is then formed into a loop around the plant P and joined end-to-end by engaging the slots at its respective opposite ends, such that the coated surface faces radially outwardly of the loop.

The strip 12 completely surrounds the base of the plant P and it will be appreciated that the coated surface of the strip lies perpendicular to the soil and thus presents a physical barrier over which slugs and snails must climb before they reach the plant P.

Any slugs and snails which attempt to climb over the strip will either eat or come into contact with the molluscicide, which kills them and ensures that the plant is not eaten.

The strip 12 is far more effective at protecting plants from slugs and snails than conventional pellets, since pellets can be avoided by slugs and snails, unless they are sprinkled liberally. Another advantage of the strips is that the danger of any molluscicide pellets being consumed by animals, birds and children is avoided.

In an alternative arrangement, a plurality of strips 12 can be connected end-to-end around larger plants or around borders.

Referring to Figure 1, in an alternative embodiment, the strips 12 may comprise a region of adhesive 14 at one end enabling the strips to be joined end-to-end with themselves or with or other devices around the stem of a plant.

## Claims

1. A pest control device comprising an elongate strip of flexible substrate material, which is coated on at least one side thereof with a molluscicide.

2. A pest control device as claimed in claim 1, comprising means at least one end of the strip enabling opposite ends of the strip to be joined together or enabling a plurality of strips to be joined end-to-end.

3. A pest control device as claimed in claim 2, in which said means comprises complementary engaging means disposed at opposite ends of the strip.

4. A pest control device as claimed in claim 3, in which the complementary engaging means comprises slits respectively extending from opposite side edges of the strip across the width thereof adjacent respective opposite ends of the strip.

5. A pest control device as claimed in claim 1, in which the substrate material comprises plastics.

6. A pest control device as claimed in claim 1, in which the substrate material comprises a bio-degradable material.

7. A pest control device as claimed in claim 1, in which the strip is also coated with a bait and a substance which repels vertebrates.

8. A pest control device as claimed in claim 7, in which said bait and said substance are adhered to the substrate.

9. A pest control device comprising an elongate strip of flexible substrate material, which is coated on at least one side thereof with a molluscicide and which is joined together at its opposite ends.

10. A pest control device comprising a plurality of elongate strips of flexible substrate material, each strip being coated on at least one side thereof with a molluscicide, the strips being joined end to end.

11. An assembly of elongate pest control devices comprising a sheet of flexible substrate material coated on at least one side thereof with a molluscicide, the sheet being formed with at least one line of weakness enabling the sheet to be divided into strips respectively forming said pest control devices.

12. A method of protecting a plant or area against pests comprising the steps of:
providing a pest control device comprising a strip of flexible substrate material coated on at least one side thereof with a molluscicide; and
joining the device end-to-end with itself or with other such devices around the area or plant to be protected.

13. A method as claimed in claim 12, in which the or each device is separated from a sheet of such devices.

14. A method as claimed in claim 12, in which the or each device is separated from a sheet of such devices by tearing along performed lines of weakness in the sheet.

15. A method of forming pest control devices comprising coating a sheet of flexible substrate material with a molluscicide and subsequently dividing the sheet into elongate strips to form individual devices.

16. A method as claimed in claim 12, in which the sheet is formed with lines of weakness, along which the sheet can be divided.
